# EUROPÄISCHE PATENTSCHRIFT

(11) **EP 1 483 801 B1**
(45) Veröffentlichungstag und Bekanntmachung des Hinweises auf die Patenterteilung: **17.08.2005**
(21) Anmeldenummer: 03712038.3
(22) Anmeldetag: 17.03.2003
(51) Int. Cl.: H01M 8/24

(54) **BRENNSTOFFZELLENANORDNUNG MIT VERSPANNUNGSVORRICHTUNG**
FUEL CELL ARRANGEMENT WITH TIGHTENING ELEMENTS
ENSEMBLE PILE A COMBUSTIBLE AVEC DES ELEMENTS DE CONTRAINTE

(30) Priorität: 18.03.2002 DE 10213067
(43) Veröffentlichungstag der Anmeldung: 08.12.2004
(73) Patentinhaber: Fraunhofer-Gesellschaft zur Förderung der angewandten Forschung e.V., 80636 München (DE)
(72) Erfinder: HEITZLER, Axel, 79232 March (DE); HEBLING, Christopher, 79110 Freiburg (DE); SCHMITZ, Andreas, 52062 Aachen (DE)
(74) Vertreter: Pfenning, Meinig & Partner GbR
(86) Internationale Anmeldenummer: PCT/EP2003/002761
(87) Internationale Veröffentlichungsnummer: WO 2003/079471

(56) Entgegenhaltungen:
- US-A- 4 692 391
- US-A- 5 789 091
- US-A- 6 040 072
- PATENT ABSTRACTS OF JAPAN vol. 2000, no. 22, 9. März 2001 (2001-03-09) & JP 2001 126750 A (MATSUSHITA ELECTRIC IND CO LTD), 11. Mai 2001 (2001-05-11)

## Beschreibung

Die vorliegenden Erfindung betrifft eine Brennstoffzellenanordnung nach dem Oberbegriff des Patentanspruches 1. In PEM-(Polyelektrolytmembran-) Brennstoffzellen treten die wesentlichen ohmschen Spannungsabfälle am ionischen Widerstand der Polymermembran und an Kontaktwiderständen auf. Diese beiden Spannungsabfälle stellen wesentliche Verlustmechanismen dar. Der Ionenwiderstand (die Protonenleitfähigkeit) sinkt dabei mit steigendem Wassergehalt der Membran. Durch technische Maßnahmen zur Befeuchtung der Membran kann der Ionenwiderstand minimiert werden. Dahin gegen wird eine Reduktion der Kontaktwiderstände im wesentlichen durch eine erhöhte Kompression einzelner Komponenten der schichtweise aufgebauten PEM-Brennstoffzelle erreicht.

Es sind Brennstoffzellenanordnungen bekannt, welche aus einer im wesentlichen parallelen und ebenen Schichtung einzelner Brennstoffzellen bestehen. Die Schichtung weist eine erste und zweite Endplatte auf, zwischen denen die dazwischen liegenden Zwischenplatten (mit Brennstoffzellenschichten in Form von Bipolärplatten, Diffusionsschichten, MEAs (Membran Electrode Assemblees) angeordnet sind.

Hierzu ist bekannt, die Endplatten als massive Stahlplatten auszuführen, zwischen welchen Schraubbolzen in Gewinden bzw. mit Schrauben verspannt werden, um die Zwischenplatten einstellbar zu komprimieren. Durch dieses Verschrauben entsteht dann ein Druck, der die Komponenten der PEM-Brennstoffzelle zusammendrückt. Dies Anordnung nach dem Stand der Technik weist mehrere Nachteile auf.

Zum einen ist die Anordnung durch die starren Endplatten, welche notwendig sind, um den von den Bolzen punktuell ausgehenden Druck flächig zu verteilen, recht schwer. Und somit unvorteilhaft (insbesondere für mobile Anwendungen). Außerdem wird die aktive Brennstoffzellen-Fläche durch Bohrungen, welche zur Führung der Verspannungsbolzen notwendig sind, verkleinert. Weiterhin ist die Einstellung eines gleichmäßigen Kompressionsdruckes recht schwer, da die einzelnen Verspannungsbolzen relativ genau justiert werden müssen.

JP 2001 126750 A beschreibt einen Brennstoffzellenstapel mit zwei Endplatten um den ein Draht schraubenförmig gewickelt ist. Die beiden Enden des Drahtes sind jeweils an einer Endplatte befestigt.

US-A-6 040 072 gibt einen Brennstoffzellenstapel an, der mittels eines Bandes komprimiert wird. Hierzu wird ein Band um den Stapel gelegt, dessen beide Enden mit einem Verbinder zusammengehalten werden. Als Bänder können Streifen, Seile, Drähte, Gürtel o.ä. dienen. In bevorzugter Weise wird ein Polymer eingesetzt.

US-A-5 789 091 zeigt Anordnungen, bei denen zwei bzw. drei Bänder um einen Brennstoffzellenstapel mit zwei Endplatten gelegt sind. Als Bänder können Polymer- und Stahlbänder verwendet werden. Falls elektrisch leitende Bänder verwendet werden, so sind sie in bevorzugter Weise isoliert.

Der vorliegenden Erfindung liegt daher die Aufgabe zugrunde, eine Brennstoffzellenanordnung zu schaffen, welche kleinbauend und gewichtssparend ist und bei der die Kompression der Brennstoffzellenschichten auf eine kostengünstige und zudem gleichmäßige Art realisiert werden kann.

Diese Aufgabe wird durch eine Brennstoffzellenanordnung nach Anspruch 1 gelöst.

Bei einer gattungsgemäßen Brennstoffzellenanordnung sind die Verspannungsmittel als um die Schichtung umlaufende Wicklung ausgeführt, wobei mindestens eine Windung der Wicklung zur Vergleichmäßigung der Flächenpressung auf die mindestens eine Zwischenplatte bezüglich der Hauptumlaufrichtung der Wicklung einen Versatz aufweist, und somit auf eine einfache Art eine gleichmäßige Druckeinleitung möglich ist.

Unter "Windung" wird hier genau ein Umlauf eines linienförmigen Elements in der Hauptumlaufrichtung verstanden, d.h. z.B. anfangend von einer Seitenkante einer ersten Endplatte um die Schichtung herum bis das linienförmige Material wieder (mit einem seitlichen Versatz bezüglich der Hauptumlaufrichtung) die Anfangsseitenkante trifft.

Die Wicklung ist in sich geschlossen (d.h. Anfangs- und Endpunkt miteinander verbunden sind). Es sind vielfältige Befestigungsarten für die Wicklung denkbar. So kann z.B. bei einer in sich geschlossenen Wicklung die Fixierung von Anfangs- und Endpunkt mittels Knoten stattfinden. Eine Befestigung von Anfangs- und Endpunkt miteinander bzw. mit Endplatten oder Zwischenplatten kann auch durch thermische Behandlung (z.B. Schweißen) oder Kleben erfolgen.

Gegenüber den bekannten Realisierungsmöglichkeiten ergibt sich eine Gewichtsreduktion (günstig für portable Systeme), da einerseits nicht mehr schwere Verspannungsbolzen notwendig sind und zum anderen durch die Umwicklung eine flächigere Aufbringung des Kompressionsdruckes auf die der Endplatten möglich ist und diese daher eine geringere Steifigkeit aufweisen kann. Des weiteren wird mittels der erfindungsgemäßen Methode ein gleichmäßiger Anpressdruck dadurch ermöglicht, daß die Wicklungen eng nebeneinander gelegt werden können und somit flächig auf den gesamten Bereich der Endplatte einwirken können. Außerdem geht kein Volumen dadurch verloren, daß Löcher zur Durchführung der Verspannungsbolzen in den Brennstoffzellen vorgesehen werden müssen.

Durch die Erfindung ist es auch möglich, eine kostengünstige Brennstoffzellenanordnung zu schaffen, da die kostenaufwendige Ausrichtung der Bohrungen für die einzelnen Brennstoffzellenschichten unterbleiben kann und die hiermit einhergehenden elektrischen bzw. Dichtungsprobleme vermieden werden können.

Vorteilhafte Weiterbildungen der vorliegenden Erfindung werden in den abhängigen Patentansprüchen beschrieben.

Eine vorteilhafte Weiterbildung sieht vor, daß die Wicklung aus linienförmigen Elementen wie Draht, Schnur oder Band besteht. Diese können aus Materialien wie Kunststoffen oder Metall sein. Nach Möglichkeit sollte das Material nur geringe plastische Verformbarkeit und nur eine geringe Materialermüdung aufweisen. Als Materialien kommen in Frage: Carbonfasern; Baumwolle; Edelstahl, Polyesterfasern, Polyamidfasern, Kevlar z.B. Aramid (Kevlar 49). Auch sind Verbundmaterialien denkbar, die aus einer Kombination dieser Materialien bestehen. Außerdem ist eine geeignete Art der Webung zur Erreichung der oben genannten Materialanforderungen zu wählen. Nutzbar sind als Schnüre z.B. Drachenschnüre, welche unter der Bezeichnung Coramid® und Dyneema® kommerziell erhältlich sind. Vorteilhaft ist, wenn diese Werkstoffe einen Elastizitätsmodul zwischen 5 und 200 kN/mm² aufweisen. Als weitere Kenngrößen sind die Dehnung zu beachten sowie die Reißfestigkeit (für die Einzelfaser vorteilhafterweise 20-400cN/tex). Hierbei ist besonders wichtig, daß die linienförmigen Elemente bei Feuchte und Temperatur (bis 100 Grad Celsius, vorzugsweise bis 150 Grad Celsius) keine wesentlichen Formänderungen erfahren. Außerdem sind Materialien zu wählen, welche auch über längere Zeit formbeständig sind und diese oben geforderten Eigenschaften auch über längere Zeit einhalten. Hierbei ist es besonders vorteilhaft, daß die linienförmigen Elemente aus einem elektrisch isolierenden Material sind bzw. mit einem elektrisch isolierenden Material beschichtet sind (z.B. kunststoffbeschichtete Stahldrähte)um Kurzschlüsse in der Brennstoffzellenanordnung zu vermeiden.

Eine weitere vorteilhafte Ausführungsform sieht vor, daß die Wicklung die Schichtung mehrfach umläuft. Hierdurch kann Druck auf praktisch beliebige Stellen der Endplatten ausgeübt werden. Besonders vorteilhaft ist hierbei, daß beim Spannen der Wicklung eine gleichmäßige Druckausübung auf die Endplatte leicht erzielbar ist, da zwischen den einzelnen Windungen praktisch automatisch eine Mittelung der Spannung in Verlaufsrichtung der linienförmigen Elemente stattfindet und damit eine Mittelung des Druckes auf die Endplatten einhergeht.

Eine weitere vorteilhafte Ausführungsform sieht vor, daß die Wicklung aus Einzelwindungen besteht, welche jeweils die Schichtung nicht mehr als einmal umlaufen.

Eine besonders vorteilhafte Weiterbildung sieht vor, daß die Wicklung die Schichtung schraubenförmig unter einem konstanten Steigungswinkel umläuft. Somit ist gewährleistet, daß über die gesamte Fläche der Endplatten ein relativ gleichmäßiger Druck eingebracht wird.

Eine weitere vorteilhafte Ausführungsform sieht vor, daß die einzelnen Windungen der Wicklung auf der ersten Endplatte keinen Versatz und auf der gegenüberliegenden zweiten Endplatte einen Versatz aufweisen, z.B. auf der einen Endplatte unter konstantem Steigungswinkel geführt sind und auf der entgegengesetzten Seite z.B. parallel zu der Umlaufrichtung der Wicklung angeordnet sind.

Eine weitere vorteilhafte Weiterbildung sieht vor, daß eine erste und eine zweite Wicklung vorgesehen ist, wobei die erste Wicklung die zweite kreuzt. So ist es möglich, zwei Wicklungen über Kreuz zu legen, welche um 90 Grad zueinander gedreht sind, so daß eine rechteckförmige Endplatte an allen vier äußeren Seitenkanten von Linienelementen überspannt wird.

Eine vorteilhafte Ausführungsform sieht vor, daß die Endplatte Führungselemente zur Führung der Wicklung aufweist. Hierzu kann die Endplatte Einkerbungen bzw. Aussparungen / Kanäle zur Führung der linienförmigen Elemente enthalten. Selbstverständlich ist es auch möglich, an der Außenseite der Endplatten Bolzen anzubringen, welche die Umlenkung bzw. Führung der linienförmigen Elemente bewirken.

Schließlich sieht eine weitere vorteilhafte Weiterbildung vor, daß die Schichtung seitliche Öffnungen zur Sauerstoffzufuhr zu den Brennstoffzellen hin aufweist ("selbstatmende Brennstoffzelle") und die Wicklung so angeordnet ist, daß diese Öffnungen zur Gewährleistung der Sauerstoffzufuhr frei liegen, d.h. daß die Wicklung nicht die Löcher zur Sauerstoffzufuhr versperrt. In dem Fall, daß die Brennstoffzellenanordnung mit einem Band umwickelt ist (also einem Element, welches einen Flachquerschnitt aufweist), könnte dieses im Bereich der Überdeckung mit den Löchern zur Sauerstoffzufuhr selbst Öffnungen aufweisen, um so eine ungehinderte Sauerstoffzufuhr ins Innere der Brennstoffzellenanordnung zu gewährleisten. Im Fall einer Brennstoffzellenanordnung mit lediglich kleinen Abmessungen wäre es daher ausreichend, die Brennstoffzellenanordnung mit einem Band zu versehen, welches lediglich einmal um die parallele Schichtung von Platten der Brennstoffzellenanordnung läuft. Ein Vorteil dieser Variante ist ihre leichte und kostengünstige Herstellbarkeit.

Die vorliegenden Erfindung wird nun anhand mehrerer Figuren erläutert. Es zeigen:
- Figur 1a): eine Brennstoffzellenanordnung im unverspannten Züstand,
- Figur 1b): die Brennstoffzellenanordnung aus Figur 1a) im verspannten Zustand,
- Figur 1c): eine erfindungsgemäße Brennstoffzellenanordnung mit mehreren Brennstoffzellen aufeinander geschichtet,
- Figuren 2a) und 2b): Skizzen zur Erläuterung einer schraubenförmigen Umwicklung einer Brennstoffzellenanordnung.

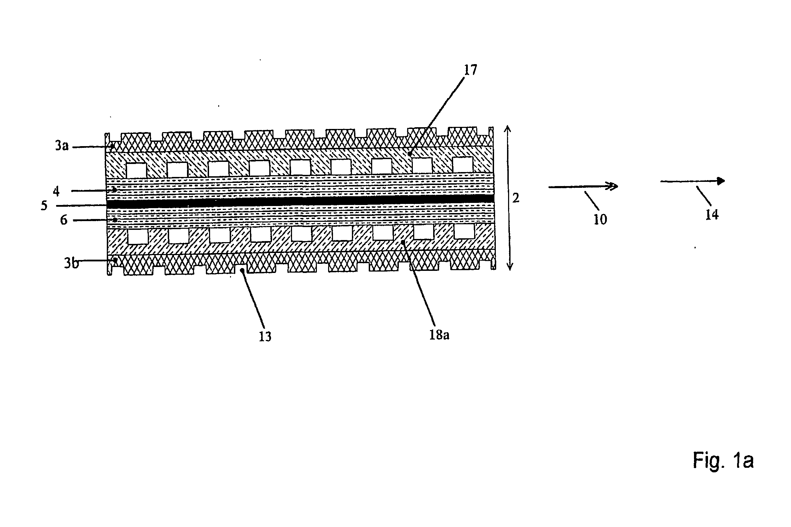

Figur 1a) zeigt eine erfindungsgemäße Brennstoffzellenanordnung im unverspannten Zustand. Diese zeigt eine obere Endplatte 3a sowie eine untere Endplatte 3b. Die obere Endplatte 3a bildet eine elektrische Kathodenseite, während die untere Endplatte 3b eine elektrische Anodenseite bildet. An die obere Endplatte 3a schließt sich nach unten hin eine Diffusionsschicht 4 an. An der Grenzfläche der oberen Endplatte 3a zur Diffusionsschicht weist die Endplatte Kanäle (ein Flowfield) zur Zufuhr von Sauerstoff als Oxydationsmittel. Die Diffusionsschicht hat den Zweck, die elektrisch leitfähige Endplatte elektrisch mit der MEA 5 (Membran Electrode Assembly) zu verbinden und außerdem die Feinverteilung von Gas von dem Flowfield zu der MEA zu gewährleisten. Hierzu weist die Diffusionsschicht eine poröse Struktur auf. Unterhalb der MEA 5 ist eine weitere Diffusionsschicht 6 angeordnet, an welche sich in Figur 1a nach unten hin ein Flowfield 18a der Endplatte 3b anschließt. Auch diese Diffusionsschicht 6, welche ebenfalls porös ist, dient zur elektrischen.Kontaktierung und Feinverteilung von Gas. Allerdings wird anodenseitig als Brennstoff bzw. Gas Wasserstoff oder auch Methanol verwendet.

Bei der vorliegenden Brennstoffzelle handelt es sich um eine sogenannte "selbstatmende" Brennstoffzelle. Hierzu sind die Kanäle des Flowfields 17 zur Umgebung hin offen, so daß der Umgebungssauerstoff Oxydationsmittel für die Brennstoffzelle darstellt. Die obere und die untere Endplatte 3a bzw. 3b weisen an ihren jeweils voneinander abgewandten Seiten kanalförmige Aussparungen 13 auf, welche zur Führung von linienförmigen Elementen dienen, mit denen die Endplatten 3a und 3b aufeinander zu gespannt werden können, um somit die dazwischen liegenden Schichten zu verspannen.

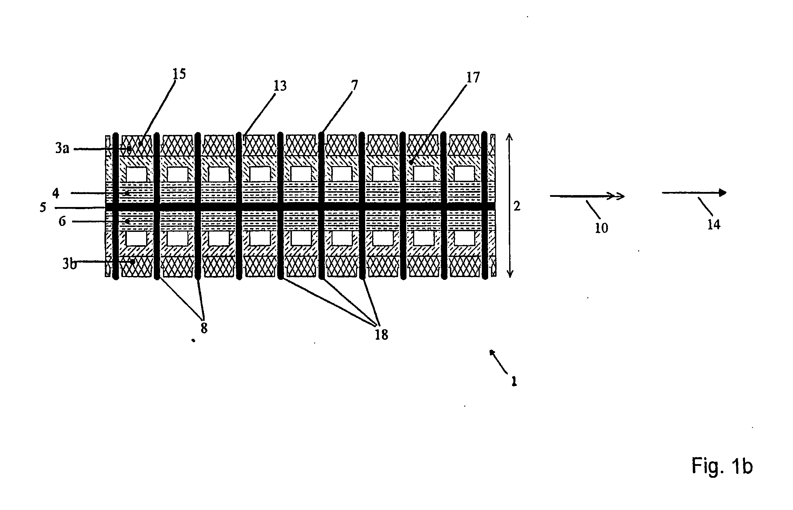

Figur 1b) zeigt eine Brennstoffzellenanordnung im verspannten Zustand. Hierbei ist ein mit elektrisch isolierendem Kunststoff ummantelter Stahldraht 18 als linienförmiges Element in die Aussparungen 13 gelegt und um die Schichtung 2, welche aus den Endplatten 3a und 3b sowie den dazwischen liegenden Diffusionsschichten 4 und 6 sowie der MEA 5 gebildet wird, gewickelt. Die Hauptumlaufrichtung der Wicklung ist die Umlaufrichtung 10, welche durch einen Doppelpfeil in Figur 1b gezeigt ist. Die Wicklung 7 ist aus einem einzigen Draht gebildet und läuft mehrmals um die Schichtung um. Zur Vergleichmäßigung der Flächenpressung auf die dazwischen liegenden Diffusionsschichten bzw. die MEA 4, 5 und 6 weisen die Windungen 8 der Wicklung 7 jeweils einen Versatz auf. Das heißt, daß nicht wie bei Spannbändern Anfangs- und Endpunkt der Wicklung identisch sind und somit lediglich an einer Stelle der Schichtung der Umfang überstrichen wird, sondern daß die Windungen in Richtung 14 einen Versatz aufweisen.

Die in Figur 1b gezeigte Brennstoffzellenanordnung weist eine Wicklung lediglich um die Hauptwicklungsrichtung 10 auf, d.h. daß die Windungen der Wicklung sich lediglich über die Endplatte 3a bzw. 3b auf ihren voneinander abgewandten Deckflächen sowie pro Endplatte lediglich über zwei Seiten Flächen (nämlich die nach vorne hin sichtbare Fläche 15 sowie deren hintere parallele Fläche) erstrecken. Die in Blickrichtung 14 sichtbaren Seitenflächen der Endplatten werden nicht umwickelt. Es sind jedoch Ausführungsformen möglich, in welchen auch über diese weiteren Seitenflächen eine Wicklung stattfindet, so daß zwei sich kreuzende Wicklungen gegeben sind.

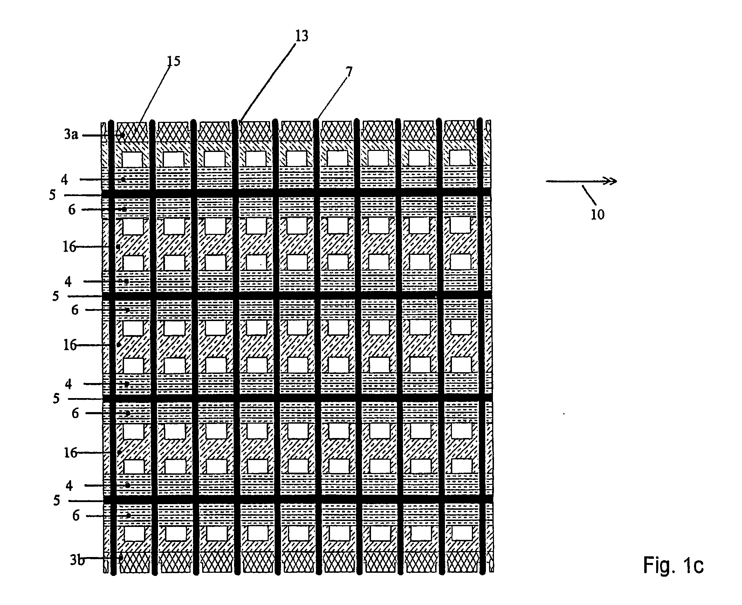

Figur 1c zeigt eine weitere Ausführungsform einer Brennstoffzellenanordnung. Diese ist im wesentlichen mit der Figur 1b gezeigten identisch, so daß insofern auf die Beschreibung dieser verwiesen wird. Der einzige Unterschied besteht darin, daß statt drei Zwischenplatten wie bei Figur 1b (d.h. den Diffusionsschichten 4 und 6 sowie der MEA 5) hier eine größere Anzahl von Zwischenschichten besteht. Hierbei ist die Schichtung so aufgebaut, daß mehrere Abfolgen von Diffusionsschicht 4, MEA 5 und Diffusionsschicht 6 gegeben sind, zwischen denen jeweils zur Gasführung und Stromleitung Bipolarplatten 16 angeordnet sind.

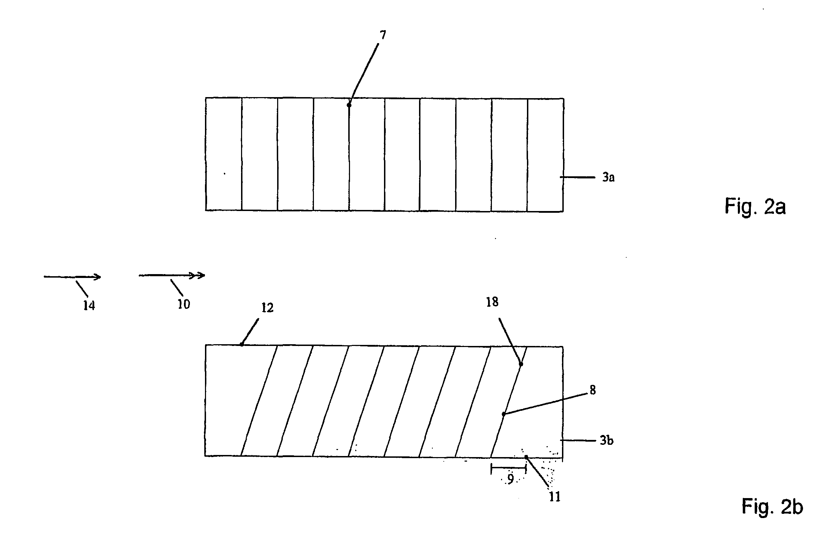

Nähere Einzelheiten zu der Wicklung werden nun anhand von Figuren 2a und 2b beschrieben welche ein Vergleichsbeispiel angeben, bei dem Anfangs- und Endpunkt der wicklung fest mit einer Endplatte verbunden sind. Figur 2a zeigt eine Draufsicht auf die obere Endplatte 3a und Figur 2b zeigt eine Draufsicht auf die untere Endplatte 3b (jeweils auf die außen liegenden Deckflächen nach Figur 1a/1b). Aus der Zusammenschau wird ersichtlich, daß die Wicklung 7 die Schichtung 2 mehrfach umläuft

Die Windungen 8 der Wicklung 7 sind auf der ersten Endplatte 3a nicht in Richtung 14 versetzt, sondern in der Blattprojektion orthogonal zur Richtung 14 angeordnet. Auf der zweiten, unteren Endplatte 3b weisen die Windungen einen Versatz in Richtung 14 um den Betrag, den das Bezugszeichen 9 anzeigt, auf. Auf der einen Endplatte 3b ist somit die Wicklung unter konstantem Steigungswinkel geführt und auf der anderen Seite ohne Steigungswinkel.

Die Wicklung hat einen Anfangspunkt 11 sowie einen Endpunkt 12. An diesen Anfangs- bzw. Endpunkten ist das linienförmige Element 18, welches die Wicklung bildet, fest mit der Endplatte 3b verbunden. Hierzu ist das linienförmige Element um an den Stellen 11 bzw. 12 angeordnete Bolzen gewickelt. Ausgehend vom Punkt 11 geht das linienförmige Element 18, welches die Wicklung bildet zunächst nach oben zur oberen Endplatte 3a hin (wenn diese wie in Figur 1b angeordnet ist). Dann überstreicht der das linienförmige Element bildende Draht 18 die obere Platte 3a bis hin zur untersten Seitenkante der Endplatte 3b. Dort wird der Draht um einen Versatz 9 entgegen Richtung 14 geführt. Dieser Durchlauf bezeichnet im Sinne der Anmeldung eine einzelne "Windung". Vorn dort an beginnt eine neue Windung, sowie weitere, bis der Endpunkt 12 erreicht ist.

## Patentansprüche

1. Brennstoffzellenanordnung (1), welche eine im wesentlichen parallele Schichtung (2) aufweist, wobei die Schichtung über eine erste (3a) und zweite (3b) Endplatte sowie mindestens eine dazwischen liegende Zwischenplatte (4, 5, 6) verfügt und die Endplatten über Verspannungsmittel zur Kompression der mindestens einen Zwischenplatte (4, 5, 6) verspannbar sind, wobei die Verspannungsmittel als um die Schichtung (2) umlaufende Wicklung (7) ausgeführt sind, wobei mindestens eine Windung (8) der Wicklung bezüglich der Hauptumlaufrichtung (10) der Wicklung einen Versatz (9) aufweist, **dadurch gekennzeichnet, dass** die Wicklung in sich geschlossen ist.

2. Brennstoffzellenanordnung nach Anspruch 1, **dadurch gekennzeichnet, dass** die Wicklung (7) aus linienförmigen Elementen wie Draht, Schnur oder Band besteht.

3. Brennstoffzellenanordnung nach einem der vorhergehenden Ansprüche, **dadurch gekennzeichnet, dass** die Wicklung (7) aus elektrisch isolierenden Material besteht und/oder mit elektrisch isolierenden Material beschichtet ist.

4. Brennstoffzellenanordnung nach einem der vorhergehenden Ansprüche, **dadurch gekennzeichnet, dass** die Wicklung (7) die Schichtung (2) mehrfach umläuft.

5. Brennstoffzellenanordnung nach einem der vorhergehenden Ansprüche, **dadurch gekennzeichnet, dass** die Wicklung (7) aus Einzelwindungen besteht, welche jeweils die Schichtung (2) nicht mehr als einmal umlaufen.

6. Brennstoffzellenanordnung nach einem der vorhergehenden Ansprüche, **dadurch gekennzeichnet, dass** die Wicklung die Schichtung schraubenförmig unter einem konstanten Steigungswinkel umläuft.

7. Brennstoffzellenanordnung nach einem der vorhergehenden Ansprüche 1-5, **dadurch gekennzeichnet, dass** die einzelnen Windungen (8) der Wicklung (7) auf der ersten Endplatte (3a) keinen Versatz und auf der zweiten Endplatte (3b) einen Versatz aufweisen.

8. Brennstoffzellenanordnung nach einem der vorhergehenden Ansprüche, **dadurch gekennzeichnet, dass** eine erste und eine zweite Wicklung vorgesehen sind, wobei diese Wicklungen sich kreuzen.

9. Brennstoffzellenanordnung nach einem der vorhergehenden Ansprüche, **dadurch gekennzeichnet, dass** mindestens eine Endplatte (3a, 3b) Führungselemente zur Führung der Wicklung aufweist.

10. Brennstoffzellenanordnung nach Anspruch 10, **dadurch gekennzeichnet, dass** die Führungselemente als Aussparungen (13) oder Erhöhungen der Endplatten (3a, 3b) oder als Zusatzelemente wie Bolzen oder dergleichen ausgeführt sind.

11. Brennstoffzellenanordnung nach einem der vorhergehenden Ansprüche, **dadurch gekennzeichnet, dass** die Schichtung seitliche Öffnungen zur Sauerstoffzufuhr zu den Brennstoffzellen aufweist und die Wicklung so angeordnet ist, dass diese Öffnung zur Gewährleistung der Sauerstoffzufuhr freiliegt.

## Claims

1. Fuel cell arrangement (1) comprising an essentially parallel coating (2), and the coating includes a first (3a) and second (3b) end plate as well as at least one intermediate plate (4, 5, 6) located thereinbetween, and the end plates can be clamped via a clamping means for compression of the at least one intermediate plate (4, 5, 6), and the clamping means is designed as a winding (7) which extends peripherally around the coating (2), and at least one winding (8) of the winding is relative to the main peripheral direction (10) of the winding offset (9), **characterised in that** the winding is in itself closed.

2. Fuel cell arrangement according to Claim 1, **characterised in that** the winding (7) is composed of linearly shaped elements, such as wire, string and tape.

3. Fuel cell arrangement according to one of the above claims, **characterised in that** the winding (7) is composed of electrically insulating material and/or coating with electrically insulating material.

4. Fuel cell arrangement according to one of the above claims, **characterised in that** the winding (7) extends multiply around the coating (2).

5. Fuel cell arrangement according to one of the above claims, **characterised in that** the winding (7) is composed of individual windings which extend not more than once around a respective coating (2).

6. Fuel cell arrangement according to one of the above claims, **characterised in that** the winding extends screwlike relative to the coating at a constant inclination angle.

7. Fuel cell arrangement according to one of the above claims 1 to 5, **characterised in that** the individual windings (8) or the winding (7) are not offset on the first end plate (3a) but are offset on the second end plate (3b).

8. Fuel cell arrangement according to one of the above claims, **characterised in that** a first and a second winding are provided, and the windings intersect one another.

9. Fuel cell arrangement according to one of the above claims, **characterised in that** the at least one end plate (3a, 3b) comprises guide elements for guiding the winding.

10. Fuel cell arrangement according to Claim 10, **characterised in that** the guide elements are designed as cutouts (13) or elevations of the end plates (3a, 3b) or as supplementary elements such as bolts or the like.

11. Fuel cell arrangement according to one of the above claims, **characterised in that** the coating has lateral openings for delivery of oxygen to the fuel cells, and the winding is arranged in such a manner that this opening is exposed in order to ensure oxygen delivery.

## Revendications

1. Ensemble pile à combustible (1) qui présente une stratification (2) essentiellement parallèle, dans lequel la stratification dispose d'une première (3a) et d'une seconde (3b) plaques d'extrémité, ainsi que d'au moins une plaque intermédiaire (4, 5, 6) placée entre elles, et dans lequel les plaques d'extrémités peuvent être haubanées par des moyens de haubanage à des fins de compression d'au moins une plaque intermédiaire (4, 5, 6), où les moyens de haubanage sont exécutés en tant qu'enroulement (7) entourant la stratification (2), au moins une spire (8) de l'enroulement présentant un décalage (9) par rapport à la direction de rotation principale (10) de l'enroulement, **caractérisé en ce que** l'enroulement est en soi fermé.

2. Ensemble pile à combustible selon la revendication 1, **caractérisé en ce que** l'enroulement (7) se compose d'éléments de type linéaires comme un câble, un cordon ou une bande.

3. Ensemble pile à combustible selon l'une des revendications précédentes, **caractérisé en ce que** l'enroulement (7) se compose d'un matériau électriquement isolant et/ou est revêtu d'un matériau électriquement isolant.

4. Ensemble pile à combustible selon l'une des revendications précédentes, **caractérisé en ce que** l'enroulement (7) entoure plusieurs fois la stratification (2).

5. Ensemble pile à combustible selon l'une des revendications précédentes, **caractérisé en ce que** l'enroulement (7) se compose de spires séparées qui entourent respectivement la stratification (2) une fois au maximum.

6. Ensemble pile à combustible selon l'une des revendications précédentes, **caractérisé en ce que** l'enroulement entoure la stratification à la façon d'une hélice selon un angle d'inclinaison constant.

7. Ensemble pile à combustible selon l'une des revendications 1 à 5 précédentes, **caractérisé en ce que** les différentes spires (8) de l'enroulement (7) ne présentent pas de décalage sur la première plaque d'extrémité (3a) et présentent un décalage sur la seconde plaque d'extrémité (3b).

8. Ensemble pile à combustible selon l'une des revendications précédentes, **caractérisé en ce que** l'on prévoit une première et une seconde spires, ces spires se croisant.

9. Ensemble pile à combustible selon l'une des revendications précédentes, **caractérisé en ce qu'**au moins une plaque d'extrémité (3a, 3b) présente des éléments de guidage destinés à guider l'enroulement.

10. Ensemble pile à combustible selon la revendication 10, **caractérisé en ce que** les éléments de guidage sont conçus en tant que creux (13) ou bosses des plaques d'extrémité (3a, 3b) ou en tant qu'éléments supplémentaires comme des boulons ou équivalents.

11. Ensemble pile à combustible selon l'une des revendications précédentes, **caractérisé en ce que** la stratification présente des ouvertures latérales permettant un apport d'oxygène vers les piles à combustible et que l'enroulement est disposé de façon telle qu'il libère cette ouverture pour garantir l'apport d'oxygène.
